# FASCICULE DE BREVET EUROPEEN

(11) **EP 2 085 623 B1**
(45) Date de publication et mention de la délivrance du brevet: **30.11.2011**
(21) Numéro de dépôt: 09305065.6
(22) Date de dépôt: 23.01.2009
(51) Int. Cl.: F16B 5/06, B62D 65/02, B62D 35/00, B60J 1/20

(54) **Procédé de montage d'un becquet sur un véhicule automobile et agencement de montage obtenu**
Verfahren zur Montage eines Spoilers an ein Kraftfahrzeug und entsprechende Montageanordnung
Method of installing a spoiler on an automobile and installation arrangement obtained therewith

(30) Priorité: 29.01.2008 FR 0800454
(43) Date de publication de la demande: 05.08.2009
(73) Titulaire: Renault S.A.S., 92100 Boulogne-Billancourt (FR)
(72) Inventeur: Grosdidier, François, 91620 La Ville du Bois (FR); Grosdidier, Marc, 91650 Saint Yon (FR); Sueur, Eric, 91090 Lisses (FR)

(56) Documents cités:
- JP-A- 60 047 770
- US-A- 5 360 253
- US-A- 5 435 617

## Description

L'invention concerne un procédé de montage d'un becquet sur un véhicule automobile et l'agencement de montage obtenu, et notamment un becquet apte à être monté à la place d'un aileron sur un véhicule automobile ou inversement.

On sait qu'un tel dispositif a pour but de renforcer l'appui au sol des roues d'un véhicule et donc son adhérence en vue d'une meilleure tenue de route, notamment pour les véhicules automobiles de sport.

De plus, les fixations d'un aileron sont généralement réalisées au moyen de quatre vis, deux à chaque point de fixation latéral à la carrosserie du véhicule automobile.

Par ailleurs, le becquet selon l'invention a pour but de reprendre les fixations d'un aileron existant, fixé en partie par quatre vis, deux à chacun de ses points de fixation latéraux. Cette reprise n'est pas toujours possible entre les diverses versions du véhicule à équiper.

Une telle fixation de becquet ou d'aileron à quatre vis de fixation nécessite en outre l'intervention de deux personnes, une de chaque côté du becquet ou de l'aileron pour la fixation de celui-ci.

Un procédé de montage d'un becquet de type à quatre points de fixation conformément au préambule de la revendication 1 est connu de JP60047770A.

L'invention a pour but de remédier à ces inconvénients et notamment de permettre le montage d'un tel becquet ou aileron à quatre points de fixation au moyen d'une seule personne.

Il est en effet proposé selon l'invention un procédé de montage d'un becquet ou d'un aileron, de type à quatre points de fixation, deux à chacune de ses extrémités de fixation latérales, caractérisé en ce qu'il comporte les étapes de montage suivantes :
- fixer à chacune desdites extrémités de fixation latérales du becquet ou de l'aileron une patte de fixation pourvue d'un élément de prémaintien du becquet ou de l'aileron à la carrosserie et d'un élément de fixation du becquet ou de l'aileron à la carrosserie, ces éléments de prémaintien et de fixation étant prévus pour être introduits dans chacun des trous des points de fixation du becquet ou de l'aileron à la partie de carrosserie support correspondante du véhicule,
- disposer ledit becquet ou l'aileron ainsi équipé en prémaintien sur la carrosserie du véhicule, en engageant les éléments de prémaintien sur les trous correspondants des points de fixation de la partie de carrosserie support, hayon ou porte de coffre par exemple, et,
- fixer lesdits éléments de fixation de chacune des pattes de fixation solidairement à ladite partie de carrosserie support, en sorte de fixer ledit becquet ou l'aileron à la carrosserie de véhicule.

Lorsque la partie de carrosserie de support est un hayon ou une porte de coffre, le becquet ou l'aileron est disposé en prémaintien sur la carrosserie, le hayon ou porte de coffre étant de préférence fermé, puis, après ouverture du hayon ou porte de coffre, le becquet ou l'aileron est fixé définitivement.

Ledit élément de prémaintien de chacune des pattes de fixation peut être un clip de préférence à extrémité conique, facile à introduire et engager dans le trou correspondant de la zone de fixation du becquet ou de l'aileron sur la partie support de carrosserie de véhicule.

Il résulte de cette disposition selon l'invention que le becquet ou l'aileron est d'abord disposé en prémaintien sur la partie support de carrosserie par une seule personne opératrice et que cette même personne peut agir ensuite sur les éléments de fixations, l'un après l'autre, à chacune des extrémités de fixation du becquet ou de l'aileron à la carrosserie, la partie de carrosserie support étant ouverte, sans avoir à tenir ou maintenir en position le becquet ou l'aileron.

De plus, l'élément de prémaintien étant disposé à faible distance de l'élément de fixation sur une même patte, il agit en service comme un point de fixation secondaire, les efforts étant en effet supportés par la patte, entre l'élément de prémaintien et l'élément de fixation.

Ledit becquet ou aileron peut être du type constitué de deux parties d'enveloppe, adjacentes l'une à l'autre et solidarisées l'une à l'autre pour former ledit becquet ou aileron.

Ladite patte de fixation peut être montée interposée entre lesdites parties d'enveloppe solidairement à celles-ci.

Ladite patte de fixation peut ainsi être maintenue en "sandwich" entre lesdites parties d'enveloppe, et fixée à celles-ci, par exemple par collage.

Elle peut être également fixée à la partie d'enveloppe traversée par lesdits éléments de fixation et de prémaintien de la patte, par exemple la partie d'enveloppe inférieure du becquet.

Avantageusement, ladite zone de fixation entre le becquet ou l'aileron et la partie support de carrosserie correspondante du véhicule peut être recouverte d'une couche de matériau apte à réaliser l'étanchéité de la fixation et éventuellement à absorber les vibrations de roulement du véhicule.

De plus, la fixation du becquet ou de l'aileron peut être complétée par d'autres moyens de fixation à la partie support de carrosserie, par exemple par collage du becquet à la carrosserie par un adhésif double face.

Naturellement, l'invention concerne également un agencement de montage d'un becquet ou aileron à une partie support correspondante d'un véhicule automobile, caractérisé en ce qu'il comporte une patte de fixation pourvue d'un élément de prémaintien du becquet ou de l'aileron à la carrosserie et d'un élément de fixation du becquet ou de l'aileron à la carrosserie, ces éléments de prémaintien et de fixation étant prévus pour être introduits dans chacun des trous des points de fixation du becquet ou de l'aileron à la partie de carrosserie support correspondante du véhicule.

L'invention est illustrée ci-après à l'aide d'un exemple de réalisation et en référence aux dessins annexés sur lesquels :
- La figure 1 est une vue d'un agencement de montage selon l'invention d'un becquet fixé à une porte de coffre de type hayon de véhicule automobile,
- La figure 2 montre selon une vue en perspective une patte de fixation selon l'invention montée sur une partie d'enveloppe du becquet, et
- La figure 3 montre le becquet sur lequel est montée la patte de fixation.

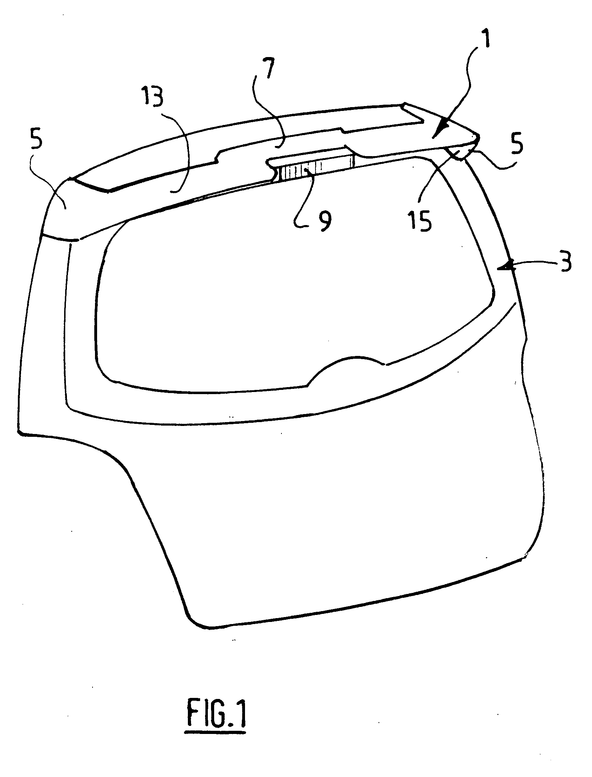

Avec référence à la figure 1, on a représenté un becquet 1 selon l'invention monté sur la porte hayon 3 d'un véhicule automobile, à la partie supérieure de celle-ci.

Ce becquet 1 est fixé sur la porte hayon 3 par chacune de ses deux extrémités latérales 5 et par une partie centrale 7 intégrant un troisième feu de stop 9.

La partie centrale 7 est collée sur la surface en regard de la porte hayon 3 au moyen d'un adhésif double face, sensiblement au niveau du troisième feu de stop 9.

Lesdites extrémités latérales 5 du becquet, symétriques l'une de l'autre relativement à un plan longitudinal médian du véhicule, sont galbées pour s'appliquer en contact sur les surfaces en regard profilées des parties supérieures latérales correspondantes de la porte hayon 3.

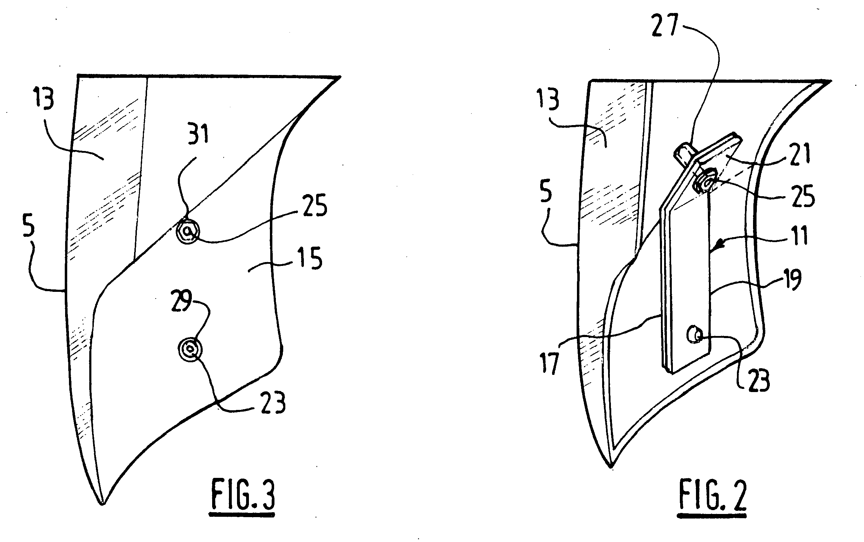

Elles comportent chacune une patte de fixation 11 (figure 2) montée insérée entre les parties d'enveloppe supérieure 13 et inférieure 15 du becquet, ces parties d'enveloppe 13, 15, sensiblement à demi forme du becquet étant solidarisées l'une à l'autre par leur bord par collage pour former le becquet.

La patte de fixation 11 est insérée dans un logement complémentaire 17 formé entre lesdites parties d'enveloppe (en partie représenté). Elle est fixée éventuellement par collage dans ce logement 17.

Cette patte 11 est pliée à forme de V pour correspondre à la surface galbée de la zone support de fixation de la porte hayon. Elle comporte ainsi un segment inférieur 19 et un segment supérieur 21, lequel est tourné selon un angle d'environ 120° relativement au segment inférieur 19.

Le segment inférieur 19 comporte à sa partie inférieure un élément clip 23 (élément de prémaintien) formé en saillie et dont la tête est conique. Le segment supérieur 21 est pourvu sensiblement en sa partie médiane d'un élément de fixation, à savoir une vis 25, et son fût de vissage 27 à l'opposé. Dans l'exemple, le fût de vissage 27 est solidaire de la patte de fixation.

L'ensemble de la patte, excepté la vis de fixation 25, est issu de moulage en matière synthétique, plastique dur notamment.

On peut également envisager que la vis de fixation 25 soit maintenue sur la patte de fixation, sa tige saillant dans la même direction que le clip 23, et la vis étant ultérieurement fixée à la porte hayon au moyen d'un boulon.

Cette patte 11 est montée sur la partie d'enveloppe inférieure 15 du becquet, l'élément clip 23 et l'élément de fixation (vis 25) étant introduits dans chacun des trous traversants correspondants 29, 31 de la partie d'enveloppe inférieure 15 (figure 3) prévus en correspondance avec les trous de la zone de fixation du becquet 1 à la porte hayon 3. La partie d'enveloppe supérieure 13 du becquet est ensuite montée sur la partie d'enveloppe inférieure 15, étant par exemple collée à celle-ci par son bord de périphérie. La patte 11 est alors prise en sandwich dans son logement 17 entre lesdites parties d'enveloppe 13, 15 et maintenue en position solidairement à celles-ci. Cette patte 11 peut éventuellement être collée dans son logement ainsi que précité pour compléter sa fixation.

Il ne reste plus qu'à monter le becquet 1 sur la carrosserie du véhicule, à savoir la porte hayon 3.

Cette dernière étant fermée, l'opérateur positionne le becquet 1 sur la porte hayon 3 et introduit chacun des éléments clips 23 des extrémités latérales de fixation 5 du becquet dans chacun des trous prévus à cet effet sur la zone de fixation correspondante de la porte hayon. Cette zone est recouverte d'une couche de matériau souple (mousse polyuréthane par exemple) conférant l'étanchéité à la fixation. L'opérateur pousse le becquet 1 de façon à engager en clippage chacun des éléments clips 23 dans chacun des trous de réception correspondants. Cela fait, le becquet 1 est alors maintenu en position sur la porte hayon 3. La porte hayon 3 peut à présent être amenée en ouverture et l'opérateur peut maintenant visser chacune des vis 25 des pattes de fixation sur chacune des zones de fixation latérales 5 du becquet, alternativement. Cette opération est exercée d'une main alors qu'un contre appui est réalisé par l'autre main sur le becquet 1 pour permettre la prise de vissage.

La bande de protection de l'adhésif double face (non représenté) de la partie centrale 7 du becquet peut alors être retirée et le becquet est alors appliqué en collage par cette zone centrale sur la carrosserie. Le becquet est à présent fixé à la porte hayon.

Naturellement, le démontage du becquet est possible, étant réalisé d'une façon inverse au montage précité.

De plus, il est à noter que le montage d'un aileron à la carrosserie d'un véhicule, une porte de coffre notamment, est réalisée d'une façon similaire au montage du becquet précité, à l'exception du collage par un adhésif en zone centrale du becquet.

Enfin, la patte de fixation peut également être fixée extérieurement à la surface du becquet ou de l'aileron, à l'endroit prévu de fixation à la carrosserie du véhicule.

## Revendications

1. Procédé de montage d'un becquet (1) ou d'un aileron, de type à quatre points de fixation, deux à chacune de ses extrémités de fixation latérales (5), **caractérisé en ce qu'**il comporte les étapes de montage suivantes :
- fixer à chacune desdites extrémités de fixation latérales (5) du becquet ou de l'aileron une patte de fixation (11) pourvue d'un élément de prémaintien (23) du becquet (1) ou de l'aileron à la carrosserie (3) et d'un élément de fixation (25) du becquet (1) ou de l'aileron à la carrosserie (3), ces éléments de prémaintien (23) et de fixation (25) étant prévus pour être introduits dans chacun des trous des points de fixation du becquet (1) ou de l'aileron à la partie de carrosserie support correspondante (3) du véhicule,
- disposer ledit becquet (1) ou l'aileron ainsi équipé en prémaintien sur la carrosserie (3) du véhicule, en engageant les éléments de prémaintien (23) sur les trous correspondants des points de fixation de la partie de carrosserie support (3), hayon (3) ou porte de coffre par exemple, et,
- fixer lesdits éléments de fixation (25) de chacune des pattes de fixation (11) solidairement à ladite partie de carrosserie support (3), en sorte de fixer ledit becquet (1) ou l'aileron à la carrosserie de véhicule (3).

2. Procédé de montage selon la revendication 1, tel que ledit élément de prémaintien (23) de chacune des pattes de fixation (11) est un clip (23) de préférence à extrémité conique, facile à introduire et engager dans le trou correspondant de la zone de fixation du becquet (1) ou de l'aileron sur la partie support de carrosserie de véhicule (3).

3. Procédé de montage selon l'une des revendications 1 ou 2, tel que ledit élément de prémaintien (23) étant disposé à faible distance de l'élément de fixation (25) sur une même patte (11), il agit en service comme un point de fixation secondaire, les efforts étant en effet supportés par la patte (11), entre l'élément de prémaintien (23) et l'élément de fixation (25).

4. Procédé de montage selon l'une des revendications précédentes, tel que ledit becquet (1) ou aileron est du type constitué de deux parties d'enveloppe (13, 15), adjacentes l'une à l'autre et solidarisées l'une à l'autre pour former ledit becquet (1) ou aileron.

5. Procédé de montage selon la revendication 4, tel que ladite patte de fixation (11) est montée interposée entre lesdites parties d'enveloppe (13, 15) solidairement à celles-ci.

6. Procédé de montage selon l'une des revendications 4 ou 5, tel que ladite patte de fixation (11) est maintenue en "sandwich" entre lesdites parties d'enveloppe (13, 15) et fixée à celles-ci, par exemple par collage.

7. Procédé de montage selon l'une des revendications 4 à 6, tel que la dite patte (11) est fixée à la partie d'enveloppe (15) traversée par lesdits éléments de fixation (25) et de prémaintien (23) de la patte (11), par exemple la partie d'enveloppe inférieure (15) du becquet (1).

8. Procédé de montage selon l'une des revendications précédentes, tel que la zone de fixation entre le becquet (1) ou l'aileron et la partie support de carrosserie correspondante (3) du véhicule peut être recouverte d'une couche de matériau apte à réaliser l'étanchéité de la fixation et éventuellement à absorber les vibrations de roulement du véhicule.

9. Procédé de montage selon l'une des revendications précédentes, tel que la fixation du becquet ou de l'aileron est complétée par d'autres moyens de fixation à la partie support de carrosserie (3), par exemple par collage du becquet (1) à la carrosserie par un adhésif double face.

10. Agencement de montage d'un becquet (1) ou aileron à une partie support correspondante (3) d'un véhicule automobile, **caractérisé en ce qu'**il comporte une patte de fixation (11) pourvue d'un élément de prémaintien (23) du becquet (1) ou de l'aileron à la carrosserie (3) et d'un élément de fixation (25) du becquet (1) ou de l'aileron à la carrosserie (3), ces éléments de prémaintien (23) et de fixation (25) étant prévus pour être introduits dans chacun des trous des points de fixation du becquet (1) ou de l'aileron à la partie de carrosserie support correspondante (3) du véhicule.

## Claims

1. Method of mounting a spoiler (1) or a wing, of the type having four fastening points, two at each of its lateral fastening ends (5), **characterized in that** it comprises the following mounting steps:
- fastening to each of said lateral fastening ends (5) of the spoiler or wing a fastening tab (11) provided with an element (23) for pre-retaining the spoiler (1) or wing on the body (3) and with an element (25) for fastening the spoiler (1) or wing to the body (3), this pre-retaining element (23) and this fastening element (25) being provided to be introduced into each of the holes at the points for fastening the spoiler (1) or wing on the corresponding underlying body part (3) of the vehicle,
- arranging said spoiler (1) or wing equipped in this way in a pre-retained position on the body (3) of the vehicle by engaging the pre-retaining elements (23) in the corresponding holes at the points for fastening the underlying body part (3), tailgate (3) or boot lid, for example, and
- fastening said fastening element (25) of each of the fastening tabs (11) securely to said underlying body part (3) such that said spoiler (1) or wing is fastened to the body of the vehicle (3).

2. Mounting method according to Claim 1, wherein said element (23) for pre-retaining each of the fastening tabs (11) is a clip (23), preferably having a conical end, which is easy to introduce and engage in the corresponding hole in the fastening region of the spoiler (1) or wing to the underlying vehicle body part (3).

3. Mounting method according to either of Claims 1 and 2, therein, with said pre-retaining element (23) being arranged at a short distance from the fastening element (25) on one and the same tab (11), this pre-retaining element (23) acts in use as a secondary fastening point, since the tab (11) is subjected to loads, between the pre-retaining element (23) and the fastening element (25).

4. Mounting method according to one of the preceding claims, wherein said spoiler (1) or wing is of the type that consists of two casing parts (13, 15) which are adjacent to one another and are secured together to form said spoiler (1) or wring.

5. Mounting method according to Claim 4, wherein said fastening tab (11) is mounted in a manner interposed between said casing parts (13, 15) and secured thereto.

6. Mounting method according to either of Claims 4 and 5, wherein said fastening tab (11) is held in a "sandwiched" manner between said casing parts (13, 15) and is fastened thereto, for example by adhesive bonding.

7. Mounting method according to one of Claims 4 to 6, wherein said tab (11) is fastened to the casing part (15) through which said elements for fastening (25) and pre-retaining (23) the tab (11) pass, for example the lower casing part (15) of the spoiler (1).

8. Mounting method according to one of the preceding claims, wherein the fastening region between the spoiler (1) or wing and the corresponding underlying body part (3) of the vehicle may be covered with a layer of material that is able to seal the fastening and optionally to absorb the running vibrations of the vehicle.

9. Mounting method according to one of the preceding claims, wherein the fastening of the spoiler or wing is completed by other means for fastening to the underlying body part (3), for example by adhesive bonding of the spoiler (1) to the body by a double-sided adhesive.

10. Mounting arrangement for mounting a spoiler (1) or wing on a corresponding underlying part (3) of a motor vehicle, **characterized in that** it comprises a fastening tab (11) provided with an element (23) for pre-retaining the spoiler (1) or wing on the body (3) and with an element (25) for fastening the spoiler (1) or wing to the body (3), this pre-retaining element (23) and this fastening element (25) being provided to be introduced into each of the holes at the points for fastening the spoiler (1) or wing to the corresponding underlying body part (3) of the vehicle.

## Patentansprüche

1. Verfahren zur Montage eines Spoilers (1) oder eines Flügels von der Art mit vier Befestigungspunkten, zwei an jedem seiner seitlichen Befestigungsenden (5), **dadurch gekennzeichnet, dass** es die folgenden Montageschritte aufweist:
- Befestigen an jedem der seitlichen Befestigungsenden (5) des Spoilers oder des Flügels einer Befestigungslasche (11), die mit einem Vorhalteelement (23) des Spoilers (1) oder des Flügels an der Karosserie (3) und mit einem Befestigungselement (25) des Spoilers (1) oder des Flügels an der Karosserie (3) versehen ist, wobei diese Vorhalte- (23) und Befestigungselemente (25) vorgesehen sind, um in jedes der Löcher der Befestigungspunkte des Spoilers (1) oder des Flügels in dem entsprechenden Karosserie-Trägerbereich (3) des Fahrzeugs eingeführt zu werden,
- Anordnen des so ausgestatteten Spoilers (1) oder des Flügels in Vorhaltung auf der Karosserie (3) des Fahrzeugs, indem die Vorhalteelemente (23) in die entsprechenden Löcher der Befestigungspunkte des Karosserie-Trägerbereichs (3), zum Beispiel der Heckklappe (3) oder des Kofferraumdeckels, eingeführt werden, und
- Befestigen der Befestigungselemente (25) jeder der Befestigungslaschen (11) fest am Karosserie-Trägerbereich (3), um den Spoiler (1) oder den Flügel an der Fahrzeugkarosserie (3) zu befestigen.

2. Montageverfahren nach Anspruch 1, derart, dass das Vorhalteelement (23) jeder der Befestigungslaschen (11) ein Clip (23) vorzugsweise mit kegeligem Ende ist, der leicht in das entsprechende Loch der Befestigungszone des Spoilers (1) oder des Flügels am Trägerbereich der Fahrzeugkarosserie (3) eingeführt und eingerastet werden kann.

3. Montageverfahren nach einem der Ansprüche 1 oder 2, derart, dass, da das Vorhalteelement (23) in geringem Abstand zum Befestigungselement (25) auf der gleichen Lasche (11) angeordnet ist, es im Betrieb wie ein sekundärer Befestigungspunkt wirkt, wobei die Beanspruchungen tatsächlich von der Lasche (11) zwischen dem Vorhalteelement (23) und dem Befestigungselement (25) getragen werden.

4. Montageverfahren nach einem der vorhergehenden Ansprüche, derart, dass der Spoiler (1) oder Flügel von der Art ist, die aus zwei einander benachbarten und fest miteinander verbundenen Ummantelungsbereichen (13, 15) besteht, um den Spoiler (1) oder Flügel zu bilden.

5. Montageverfahren nach Anspruch 4, derart, dass die Befestigungslasche (11) zwischen die Ummantelungsbereiche (13, 15) eingefügt fest mit diesen verbunden montiert wird.

6. Montageverfahren nach einem der Ansprüche 4 oder 5, derart, dass die Befestigungslasche (11) zwischen den Ummantelungsbereichen (13, 15) eingeklemmt gehalten und an diesen zum Beispiel durch Kleben befestigt wird.

7. Montageverfahren nach einem der Ansprüche 4 bis 6, derart, dass die Lasche (11) an dem Ummantelungsbereich (15) befestigt wird, der von den Befestigungs- (25) und Vorhalteelementen (23) der Lasche (11) durchquert wird, zum Beispiel dem unteren Ummantelungsbereich (15) des Spoilers (1).

8. Montageverfahren nach einem der vorhergehenden Ansprüche, derart, dass die Befestigungszone zwischen dem Spoiler (1) oder dem Flügel und dem entsprechenden Karosserie-Trägerbereich (3) des Fahrzeugs mit einer Materialschicht bedeckt sein kann, die die Dichtheit der Befestigung herstellen und ggf. die Abrollschwingungen des Fahrzeugs absorbieren kann.

9. Montageverfahren nach einem der vorhergehenden Ansprüche, derart, dass die Befestigung des Spoilers oder des Flügels durch andere Befestigungseinrichtungen am Karosserie-Trägerbereich (3) vervollständigt wird, zum Beispiel durch Kleben des Spoilers (1) an die Karosserie durch einen doppelseitigen Kleber.

10. Anordnung zur Montage eines Spoilers (1) oder Flügels an einen entsprechenden Trägerbereich (3) eines Kraftfahrzeugs, **dadurch gekennzeichnet, dass** sie eine Befestigungslasche (11) aufweist, die mit einem Vorhalteelement (23) des Spoilers (1) oder des Flügels an der Karosserie (3) und mit einem Befestigungselement (25) des Spoilers (1) oder des Flügels an der Karosserie (3) versehen ist, wobei diese Vorhalte- (23) und Befestigungselemente (25) vorgesehen sind, um in jedes der Löcher der Befestigungspunkte des Spoilers (1) oder des Flügels am entsprechendem Karosserie-Trägerbereich (3) des Fahrzeugs eingeführt zu werden.
